# EUROPEAN PATENT APPLICATION

(11) **EP 2 160 066 A2**
(43) Date of publication of application: **03.03.2010**
(21) Application number: 09382155.1
(22) Date of filing: 25.08.2009
(51) Int. Cl.: H04W 72/04

(54) **Method, system and device for transferring traffic in point-to-point communications**

(30) Priority: 26.08.2008 ES 200802486
(71) Applicant: Vodafone Group PLC, Newbury Berkshire RG14 2FN (GB); Vodafone España, S.A., 28108 Alcobendas (Madrid) (ES)
(72) Inventor: Dominguez Romero, Francisco Javier, 28050, Madrid (ES); Le Pezennec, Yannick, 28050, Madrid (ES); Exadaktylos, Kyriakos, 28050, Madrid (ES)
(74) Representative: Carpintero Lopez, Francisco

(57) **Abstract**

At least a slave node (N_s) transmitting traffic in uplink (UL) and a master node (N_m) transmitting traffic in downlink (DL) are identified and connected through a radio interface (Uu') for point-to-point communication. This radio interface (Uu') provides High-Speed Downlink Packet Access (HSDPA) on both uplink (UL) and downlink (DL). Both the master node (N_m) and slave node (N_s) comprise a transceiver containing a transmitter and a receiver both connected to the radio interface using a transport channel of the MAC and physical layer defined by HSDPA. The master node (N_m) and slave node (N_s) can be implemented in a Node-B, a RNC, or a CN node and having the same hardware architecture at MAC and physical layers, since part of Uu interface is reused.

## Description

### TECHNICAL FIELD OF THE INVENTION

The present invention has its application within the telecommunications sector and, especially, in the industrial area engaged in providing access networks (e.g., UTRAN in UMTS) with elements of network infrastructures, such as base stations (Nodes-B in UMTS) for wide area cellular telephone networks (i.e. 3G networks).

More particularly, the invention described herein relates to a method and system for transmitting voice and/or data traffic on both uplink and downlink between two nodes of a telecommunication network (e.g., 3G FDD and TDD mobile networks) using the standard protocol High-Speed Downlink Packet Access (HSDPA) and in application scenarios where only one communication link is setup between the two nodes (i.e., point-to-point applications: for example, only one User Equipment (UE) is transmitting/receiving per cell).

### BACKGROUND OF THE INVENTION

Third Generation (3G) is a generic name for technologies that support high-quality voice, high-speed data and video in wireless cellular networks. The IMT-2000 specification defined by the International Telecommunication Union (ITU) established transmission rate standards for 3G systems and defines different 3G variants based on Code Division Multiple Access (CDMA) technology: Wideband CDMA (W-CDMA), cdma2000 and Time Division CDMA (TD-CDMA).

Universal Mobile Telecommunications System (UMTS), using TD-CDMA, supports up to 10.2 Mbit/s data transfer rates when using the High-Speed Downlink Packet Access (HSDPA) from the collection of wireless telephony protocols standardised as High Speed Packet Access (HSPA). UMTS, using W-CDMA, supports up to 21.6 Mbit/s data transfer rates in downlink by using 3GPP Release 7 HSDPA (and potentially higher user throughput in the next 3GPP Release), in theory; although in current operator deployments, HSDPA mainly enables downlink transfer speeds of up to 7.2 Mbit/s.

UTRAN (UMTS Terrestrial Radio Access Network) is a collective term which includes the Radio Network Controller (RNC), the 3G base stations (Nodes-B) and the air interface to the User Equipment (UE). More particularly, Node-B handles radio channels, including the multiplexing/demultiplexing of user voice and data information.

There are four interfaces connecting the UTRAN internally or externally to other functional entities:
- lu is an external interface that connects a RNC to the Core Network (CN), linking the RNC to either a Mobile Switching Center (MSC) or a Serving GPRS Support Node) SGSN.
- Uu is an external interface, which conveys both user plane data and control plane signalling between the UE and the UTRAN, connecting the Node-B with the UE, terminal or mobile equipment (ME) that includes, for example, phones, laptops and PDAs.
- lub is an internal interface conveying both user plane data and control plane signalling between the RNC with the Node-B, typically consisting of multiple T1/E1 links from each Node-B aggregated to one or several ATM STM-1 (OC-3) links or one STM-4 link.
- lur is an internal interface (for some network architectures lur can be an external interface too) and connects two RNCs with each other.

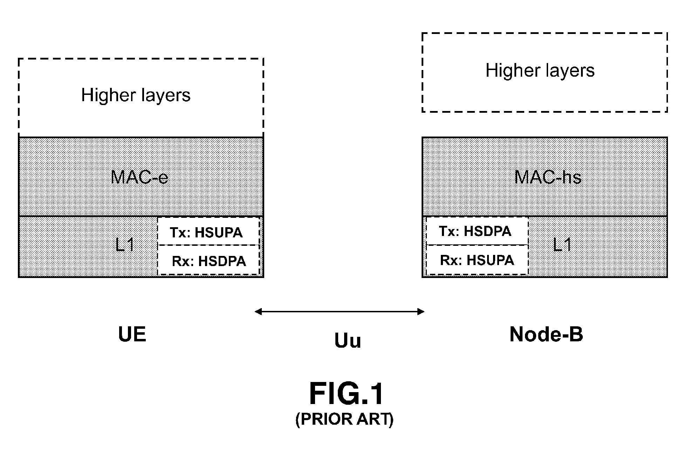

Figure 1 illustrates the existing protocol architecture of the Uu interface for providing communication between one UE and a Node-B of UTRAN. 3GPP specifications involved for WCDMA FDD (Frequency Division Duplex) are:
- 3GPP TS 25.321: "MAC Protocol Specification" especially covering MAC-hs (for HSDPA) and MAC-e (for HSUPA) entities which are residing in the Node B.
- 3GPP TS 25.211: "Physical channels and mapping of transport channels onto physical channels (FDD).
- 3GPP TS 25.212: "Multiplexing and channel coding (FDD)".
- 3GPP TS 25.213: "Spreading and modulation (FDD)".
- 3GPP TS 25.214: "Physical layer procedures (FDD)".
- 3GPP TS 25.215: "Physical layer - Measurements (FDD)"
- 3GPP TS 25.302: "Services provided by the Physical Layer (L1)". In 3G networks supporting High Speed Packet Access (HSPA), HSDPA is adopted by the Node B for packet data transfer on the downlink, the HS-DSCH is used as transport channel by the UE for receiving data (Rx). In uplink, HSPA provides the High-Speed Uplink Packet Access (HSUPA) uses E-DCH as transport channel on which link adaptation methods are employed.
- 3GPP TS 25.301: "Radio Interface Protocol Architecture".

The higher layers of the Uu interface comprise the Radio Link Control (RLC) protocol and Radio Resource Control (RRC) protocol.

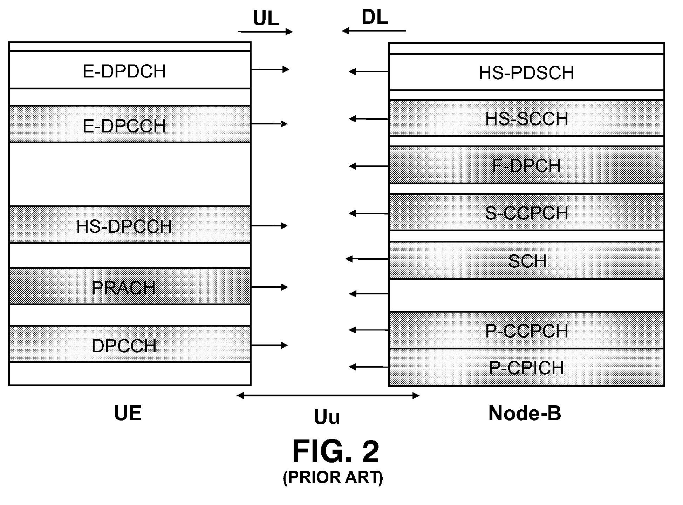

Figure 2 illustrates the existing physical channels used in uplink (UL: from the UE to the Node-B) and in downlink (DL: from the Node-B to the UE) on the Uu interface supporting HSPA. Layer 2 refers to link level defined by OSI (Open Systems Interconnection) and Layer 1 refers to physical layer of OSI.

The uplink (UL) physical layer architecture for the support of HSPA uses the following physical channel to convey the user plane data, drawn in white blocks in Figure 2:
- E-DPDCH: Enhanced - Dedicated Physical Data Channel, carrying the Enhanced Dedicated Channel (E-DCH) transport channel,

The uplink (UL) physical layer architecture for the support of HSPA uses the following physical channels in the control plane (including Access Stratum -or AS- and Non Access Stratum -or NAS- signalling to establish the HSPA data call), drawn in grey blocks in Figure 2:
- PRACH: Physical Random Access Channel carrying the Random Access Channel (RACH).
- DPCCH: Dedicated Physical Control Channel, carrying layer 1 signalling indispensable for power control and channel estimation.
- HS-DPCCH: High Speed - Dedicated Physical Control Channel, carrying layer 1/ layer 2 signalling for HSDPA.
- E-DPCCH: Enhanced-Dedicated Physical Control Channel carrying layer 1 and layer 2 signalling for HSUPA.

The downlink (DL) physical layer architecture for the support of HSPA uses the following physical channel to convey the user plane data, drawn in white blocks in Figure 2:
- HS-PDSCH: High Speed - Physical Downlink Shared Channel, carrying the HS-DSCH transport channel.

The downlink (DL) physical layer architecture for the support of HSPA uses the following physical channels in the control plane, drawn in grey blocks in Figure 2:
- HS-SCCH: High Speed - Shared Control Channel, carrying the layer 1 and layer 2 signalling for HSDPA (including UE identity, HARQ information and Transport Format Rate Control).
- F-DPCH: Fractional - Dedicated Physical Channel carrying power-control commands which can also be used for channel estimation purposes. This control channels is shared among multiple UEs in a time-multiplexed manner allowing to save Orthogonal variable spreading factor (OVSF) code resources.
- S-CCPCH: Secondary - Common Control Physical Channel, carrying the Forward Access Channel (FACH) and the Paging Channel (PCH).
- SCH: Synchronisation Channel.
- P-CCPCH: Primary - Common Control Physical Channel for carrying synchronization and broadcast information for users.
- P-CPICH: Primary Common Pilot Channel.

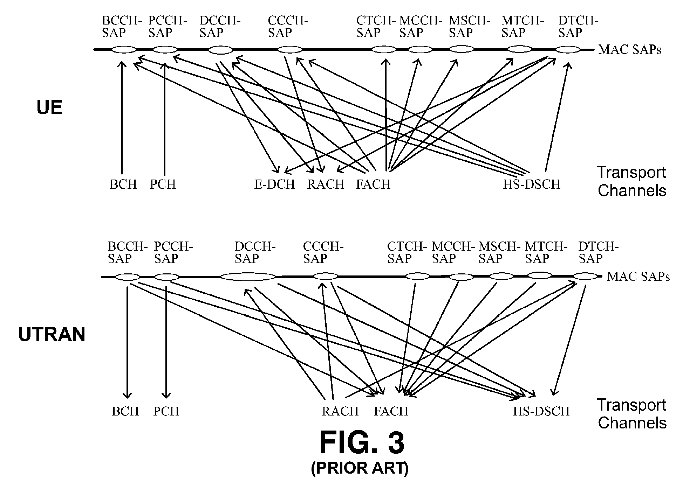

Figure 3 illustrates the mapping process between the different logical channels defined at a Media Access Control Layer - Service Access Point (MAC SAP) and the connections provided by the corresponding transport channels. This process is different in a UE from the mapping in UTRAN.

On the one hand, a point-to-point connection is defined as a dedicated communication link between two system entities or two processing modules. The opposite of point-to-point communications is broadcasting, where one entity transmits to many. When one node addresses data packets to another node and only that node receives the frames, it is said that both nodes are engaged in point-to-point communications across a communication medium, which can be shared by a plurality of nodes (e.g., a radio link). Point-to-point communications is defined in the physical and data link layers of the OSI protocol stack.

On the other hand, the use of HSPA technology as implemented in the 3GPP standards involves an asymmetry in the rates between the uplink (UL) and the downlink (DL), due to the lower spectrum efficiency in the UL.

This implies a fundamental problem when HSPA technology is applied as standardised in Point To Point (P2P) network scenarios. P2P here means to have only one point to point communication per cell, so all the resources are dedicated to only one UE. The efficiency of the 3G HSPA system in UL is lower compared to the DL (typically by a more than a factor of 2 or 3). The main reason is that in typical usage the UL is a transmission link where the receiver point is the same for all users, whilst the DL is a transmission link where the receiver is individual to each user. Besides, another fact which makes the standardised HSPA UL less efficient in P2P is that the network in the downlink has a direct control (by Node-B) on the users without involving signalling to UE, whilst on the uplink the control is indirect involving signalling to each UE.

Moreover, in a point-to-point application if the UE is installed in a fixed position, using an aggregator Node-B (a Node-B dedicated to connect with the fixed UE for collecting the data transferred from this UE), it is possible to have specific antenna solutions to increase the bit rate of the system (e.g. high gain directive antennas).

On the other hand, a macrocellular environment greatly reduces the performance of HSDPA: the probability than a user could reach more than 10 Mbps, for example, by using Release 7 of 3GPP HSDPA MIMO (Multiple Input Multiple Output), is low because of the high SNR requirements for MIMO to operate properly multiple data streams. However, if used as P2P technology, the performance of MIMO is greatly increased due to the higher probability to achieve line of sight, using specific antenna solutions which allows a very high SNR and possibility to operate in an environment with lower system interference. Therefore, the use of techniques such as higher order modulation (e.g. 64QAM) and MIMO can be an attractive solution to be used for P2P applications.

One of the possible P2P applications is a backhaul network which collects the data traffic of business companies, with an aggregator Node-B, in the customer premises. For this kind of application, as the Node B is installed by the operator, the goal is to maximise the throughput dedicated to a P2P connection.

In order to mitigate the HSPA limitations in current P2P applications a new architecture for the Node-B is presented with aim to handle the traffic optimizing performance both on UL and DL.

### SUMMARY OF THE INVENTION

The present invention serves to solve the aforesaid problem by using High-Speed Downlink Packet Access (HSDPA) technology on both downlink (DL) and uplink (UL) for any possible point-to-point (P2P) application (e.g, in wide area cellular network scenarios where there is only one transmitter and one receiver per cell, P2P communications between two nodes in fixed networks also applies).

Using HSUPA on the UL in a point-to-point (P2P) operating mode makes a clear bottleneck of the UL, whilst in such a P2P operating mode (there is only one point to point communication per cell), HSDPA technology can be used on both directions as there are no multiple user radio links to manage.

This invention allows to make the most of the existing HSDPA technology defined as part of 3GPP to build a simple and efficient symmetric point-to-point system. This is achieved by using HSDPA not only on the DL but also on the UL, reusing layer 1 and layer 2 channels which are already part of the existing Uu interface.

Using HSDPA technology not only as downlink of the P2P but also as uplink with a similar implementation maximises the spectral efficiency as well as achieving symmetric rates on both UL and DL.

In P2P applications such as backhaul networks, the throughput of the P2P connection is maximised by connecting the Node-B installed by the operator at the customer premises to another Node-B through a radio interface proposed as follows.

The radio interface connecting devices within the UTRAN that is proposed here largely reuses the HSDPA implementation already developed in existing HSDPA capable Node-B's transmitter and existing HSDPA capable UE's receiver. It should be noted that although part of the UE architecture is reused, a possible implementation of the invention is a point-to-point link between two nodes denoted hereafter: master node (Node_m) and slave node (Node_s). These Node_m and Node_S can reside wherever the point-to-point link is implemented within the radio access network (e.g., UTRAN); to mention but a few of the possibilities: for an lub P2P link, Node_m can be a module within the RNC and Node s can be a module within a Node-B communicating with said RNC; for an lu P2P link, Node_m can be a module within the SGSN and Node_s can be a module within a RNC communicating with said SGSN). The radio interface can support any of these UTRAN interfaces: lu, lub and lur. In case the Node_s is hosted inside the Node B (e.g. for lub P2P link), the proposal is to use a common baseband platform which allows a Node-B to host the protocol architectures of the existing Uu as well as of the proposed radio interface (an Uu' Interface can be defined between Node_m and Node_S). In any case (lu, lub or lur connecting the Node_m and Node_S), both nodes has the same hardware architecture, since the invention reuses part of Uu interface (but for Uu, the Node-B and UE have very different hardware architectures; for instance, the Node-B requires higher processing capacity than the UE) and this leads to an improvement with respect to current 3G systems.

A possible implementation of the solution proposed here is to build a P2P system based on HSPA 3GPP FDD standard but using the same HSDPA technology on both UL and DL directions of the P2P link. This involves using FDD (Frequency Division Duplex) spectrum for the P2P link, which can be for example the second or third carrier in the UMTS spectrum band used by an operator for the Uu radio interface (if available) or any carrier available in a separate spectrum band (e.g. new spectrum such as 2.6 GHz). Another possibility of implementation, wherever TDD (Time Division Duplex) spectrum is available, is to apply the same concept of reusing the HSDPA TDD technology for the P2P uplink.

The current invention relies on a simplified HSDPA functionality (e.g. HSDPA MIMO) which forms the aforementioned radio interface (Uu') required to be supported in the baseband platform which could be hosted in different nodes according to the point-to-point application (e.g. at Node B or RNC Level). The support of bi-directional operation of HSDPA can be evolved according to HSDPA standardisation (e.g. HSDPA 16QAM in Rel'5, HSDPA MIMO in Release 7). The invention makes use of a simplified HSDPA implementation for example with relaxed specifications as follows:
- Single user capacity. No multiuser scheduling
- Common channels, dedicated control channels and HSDPA physical channels supported only.
- Simplified layer 1 with limited transport block support (e.g. dual stream only for MIMO).
- Simplified layer 2 with large PDU size.

These special HSDPA functionality blocks are required at each termination point of the radio interface (Uu') interface. There are distinguished two termination points: the master Node (here called Node_m), which has the synchronisation and parameter broadcast capabilities to setup the system, and the slave Node (here called Node_s) which connects to the master Node via setup a HSDPA channel. The difference between Node_m and Node_s is that the Node m has the SCH and CCPCH channels, which means that the synchronisation and the channels of Broadcast information are setup by said Node m when first running. Thus, the master Node sends the synchronisation and Broadcast parameters in the respective SCH and CCPCH channels, and according to them the slave Node is then synchronised with the master.

The present technique is able to provide robust P2P links with a capacity in the order of 20 Mbps per carrier, which could be increased to more than 30 Mps based on Release 8 of 3GPP HSDPA standard through the use of 64QAM over MIMO. The solution is cost effective in the sense that it reuses standard features (e.g. standardised in 3GPP) with a significant amount of simplification compared to the MIMO solution to be deployed over the Uu not only because the interface is single user but also because the same radio technology is reused both ways.

The transfer of traffic between the two termination points, in both transmission directions (UL and DL), over the radio interface (Uu') which is proposed here, involves modifications on 3GPP HSDPA standards when defining the channels used at the physical layer (L1) and the data link layer (MAC). More specifically, the following functions are not needed anymore at L1 and MAC layers for this invention:
- The physical layer Macrodiversity function is not needed for this invention as only one termination point, the slave Node-B, is in the cell using HSDPA that has no Soft Handover.
- There is no need for using Multimedia Broadcast Multicast Service (MBMS) channel as no broadcast applies in the possible scenarios of the invention, just P2P is assumed.
- Other typical MAC functions which are not further required, since there is only one slave Node-B in the cell, are: Priority handling between data flows, , ,Traffic volume measurement, Transport Channel type switching, Access Service Class selection for RACH transmission. And In-sequence delivery and assembly/disassembly of higher layer PDUs on E-DCH that is an unused channel here.

According to the standards, the functions of MAC at the termination points defined here include:
- Mapping between logical channels and transport channels.
- Selection of appropriate Transport Format for each Transport Channel depending on instantaneous source rate.
   Multiplexing/demultiplexing of upper layer PDUs into/from transport blocks delivered to/from the physical layer on common transport channels and dedicated transport channels.
- Ciphering.
- HARQ functionality for HS-DSCH and E-DCH transmission.
- Data segmentation/re-assembly for HS-DSCH.
- In-sequence delivery and assembly/disassembly of higher layer PDUs on HS-DSCH.

And the physical layer performs the following main functions according to the standards:
- Error detection on transport channels and indication to higher layers;
- FEC encoding/decoding and interleaving/deinterleaving of transport channels;
- Multiplexing of transport channels and demultiplexing of coded composite transport channels;
- Rate matching;
- Mapping of coded composite transport channels on physical channels;
- Power weighting and combining of physical channels;
- Frequency and time (chip, bit, slot, frame) synchronisation;
- Modulation and spreading/demodulation and despreading of physical channels;
- Measurements and indication to higher layers (e.g. FER, SIR, interference power, transmit power, etc.);
- Closed-loop power control;
- RF processing.

The transport channels used at the physical layer for applying the invention in P2P links are as follows:
- Common transport channels:
   - Random Access Channel (RACH): This channel is maintained and used to setup the dedicated channel between the slave Node-B and the master Node-B.
   - Forward Access Channel (FACH): This channel is maintained and used to setup the dedicated channel between the slave Node-B and the master Node-B.
   - High Speed Downlink Shared Channel (HS-DSCH): A downlink channel to transmit all the data between the slave Node-B and the master Node-B by allocation of individual codes, from a common pool of codes assigned for the channel.
- Dedicated transport channels (where the devices are identified by the physical channel, i.e. code and frequency):
   - Dedicated Channel (DCH): A channel dedicated, mainly for signalling purposes.

In particular, the physical channels on uplink (UL) are:
- Dedicated uplink physical channels according to the 3GPP standards:
   There are five types of uplink dedicated physical channels, the uplink Dedicated Physical Data Channel (uplink DPDCH), the uplink Dedicated Physical Control Channel (uplink DPCCH), the uplink Dedicated Control Channel associated with HS-DSCH transmission (uplink HS-DPCCH), the uplink E-DCH Dedicated Physical Data Channel (uplink E-DPDCH), the uplink E-DCH Dedicated Physical Control Channel (uplink E-DPCCH); but note that: .
      ■ E-DPCCH and E-DPDCH channels are not used in the invention, as the E-DCH is substituted by the HSDPA channels.
      ■ The HS-DPCCH carries uplink feedback signalling related to downlink HS-DSCH transmission and it is used in the invention. The HS-DSCH-related feedback signalling consists of Hybrid-ARQ Acknowledgement (HARQ-ACK) and Channel-Quality Indication (CQI). The modification respect to the standard is that this channel is used for the UL as well as for the DL.
      ■ The uplink DPDCH is used to carry the DCH transport channel. The uplink DPCCH is used to carry control information generated at Layer 1. These both channels are substituted in this invention by the equivalent channel defined for DL, which is the F-DPCH. Carrying the same kind of control information.
      ■ It is also needed a Primary Common Pilot Channel (P-CPICH) to provide, from the UL to the DL, part of the reference of the HSDPA quality.
      ■ The Fractional Dedicated Physical Channel (F-DPCH) has to be used in uplink also (this is out of the 3GPP standards) and it is necessary as it is the downlink version of the DPCCH and DPDCH needed to work with HSDPA channels.

### - Common uplink physical channels:

The Physical Random Access Channel (PRACH) is used to carry the RACH.

The High Speed Physical Downlink Shared Channel (HS-PDSCH) is used to carry the High Speed Downlink Shared Channel (HS-DSCH) with all the user plane data. See Downlink physical channels. This is new respect to the standards.

The Shared Control Channel (HS-SCCH) is used in the invention also in the Uplink communication on top of the downlink normal 3GPP standard use (See below Downlink physical channels).
And in particular, the physical channels on downlink (DL) are:

### - Dedicated downlink physical channels:

There are four types of downlink dedicated physical channels, the Downlink Dedicated Physical Channel (downlink DPCH, whose function is similar to the Uplink DPCCH and DPDCH), the Fractional Dedicated Physical Channel (F-DPCH), the E-DCH Relative Grant Channel (E-RGCH), and the E-DCH Hybrid ARQ Indicator Channel (E-HICH):

E-DCH Relative Grant Channel is not used in the invention, as the E-DCH is substituted by the HSDPA channels.

E-DCH Hybrid ARQ Indicator Channel is not used in the invention, as the E-DCH is substituted by the HSDPA channels.

The F-DPCH carries control information generated at layer 1 (TPC commands). It is a special case of downlink DPCCH. The F-DPCH is preferred in this invention, for UL and DL, as it is more efficient than the DPCH.

For HS-DPCCH (see the Uplink physical channels) the modification respect to the standard is that this channel is used for the DL as well as for the UL.

### - Common downlink physical channels:

The Common Pilot Channel (CPICH) is used at a fixed rate (30 kbps, SF=256) on downlink and carries a pre-defined bit sequence. The Primary Common Pilot Channel (P-CPICH) has the following characteristics: The same channelization code is always used for the P-CPICH; The P-CPICH is scrambled by the primary scrambling code; There is one and only one P-CPICH per cell; The P-CPICH is broadcast over the entire cell. The CPICH is a downlink channel, but in this invention the slave Node-B also needs to transmit the CPICH to be used as reference for the HSDPA receiver in the master Node-B.

The Primary Common Control Physical Channel (P-CCPCH) is used to carry the BCH to send information of parameters.

The Secondary Common Control Physical Channel (S-CCPCH) is used to carry the FACH and PCH and, particularly, used as in the 3GPP standards by the master Node-B.

The Synchronisation Channel (SCH) is a downlink signal used for cell search. The SCH consists of two sub channels, the Primary and Secondary SCH. The 10 ms radio frames of the Primary and Secondary SCH are divided into 15 slots, each of length 2560 chips. This channel is used as specified in the standards by the master Node-B.

The Acquisition Indicator Channel (AICH) is an associated channel to the PRACH and used as defined in the standards to allow the first setup channel of the system between the master Node-B and the slave Node-B.

The Shared Control Channel (HS-SCCH) is a fixed rate (60 kbps, SF=128) downlink physical channel used to carry downlink signalling related to HS-DSCH transmission. In the invention, this channel is used also in the Uplink communication on top of the downlink normal 3GPP standard use.

The High Speed Physical Downlink Shared Channel (HS-PDSCH) is used to carry the High Speed Downlink Shared Channel (HS-DSCH) with all the user plane data.

An aspect of the invention refers to a method for transferring traffic in point to point communications, that is, in (fixed or wireless) network scenarios wherein a single connection is setup on the proposed radio interface (Uu') between two nodes (the master and the slave nodes). Both nodes can be within a radio access network (e.g., a Node-B or a RNC) or one of them can belong to the core network (e.g., a SGSN connected through Uu' with a RNC). This method performs the transfer of traffic (voice and data packets, including signalling) through the radio interface using a transport channel defined at the MAC and physical layer of the High-Speed Downlink Packet Access (HSDPA), not only in downlink but also using HSDPA on uplink. Transmitting traffic on the downlink (DL) comprises using a HS-DPCCH physical channel. For transmission of traffic on the uplink (UL), a physical channel which is selected from HS-PDSCH, HS-SCCH, F-DPCH and P-CPICH can be used. The transferring of traffic in the uplink (UL) and downlink (DL) uses the radio interface (Uu') which can support lub interface, lur interface or lu interface.

Another aspect of the invention deals with a system for exchanging traffic between two nodes connected by a single (point-to-point) communication link through the proposed radio interface (Uu'). This system comprises at least a first node and at least a second node capable of connecting each other through Uu' interface, being one of the nodes the so-called master node-B and the other one plays the slave Node. Both nodes can be within a radio access network (e.g., a Node-B or a RNC) or one of them can belong to the core network (e.g., a SGSN connected through Uu' with a RNC). The two nodes, master node and slave node, comprise a transceiver, having a transmitter and a receiver both connected to the Uu', the transmitter and the receiver configured for using a transport channel of MAC and physical layer of HSDPA in the downlink as well as the uplink. The slave node comprises a transmitter providing HSDPA on the uplink and a receiver providing HSDPA on the downlink. The master node comprises a transmitter providing HSDPA on the downlink connected to the receiver of the slave Node (N_s) through the Uu' and a receiver providing HSDPA on the uplink connected to the transmitter of the slave Node.

Another further aspect of the invention consists of a third generation (3G) base station (Node-B) which integrates the protocol stack that implements the method described before, comprising a transceiver configured for using a transport channel of MAC and physical layer of HSDPA in the Uu' uplink and downlink. This 3G base station can be a master Node or a slave Node connected through lub interface to another 3G base station (slave or master respectively) or a RNC playing the master Node.

A last aspect of the invention is a Radio network controller (RNC) which integrates the protocol stack that implements the method described before, comprising a transceiver configured for using a transport channel of MAC and physical layer of HSDPA in the Uu' uplink and downlink. The RNC proposed here can be a master Node connected through lub interface to a 3G base station (playing the slave Node) or through lur interface to another RNC (playing the slave Node). Also, this RNC can be a slave Node connected to the core network (CN) wherein a CN node (e.g., SGSN or MSC) is the master Node..

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a layered protocol structure defined in the prior art for the implementation of Uu interface.
Figure 2 shows a physical layer architecture for Uu interface based on HSPA as defined in the prior art for the implementation of uplink and downlink.
Figure 3 shows a schematic representation of the mapping of logical channels onto the transport channels defined in the prior art for the implementation of data link layer of Uu interface.
Figure 4 shows a layered protocol structure defined at the termination points of the Uu' radio interface, in accordance to a preferred embodiment of the invention.
Figure 5 shows the physical layer channels for the Uu' radio interface based on bidirectional HSDPA, in the user and control planes of the nodes which are a part related to the present invention.
Figure 6 shows a schematic diagram of the mapping of logical channels onto transport channels at the data link layer of the Uu' radio interface, in the two nodes which are a part related to the present invention.
Figure 7 shows a block diagram of the parts related to the present invention in a possible P2P application, according to a preferred implementation of the Uu' radio interface supporting bidirectional HSDPA with MIMO.
Figure 8 shows a schematic representation of the parts related to the present invention in another possible P2P application between two 3G base stations.
Figure 9 shows a schematic representation of the parts related to the present invention in a P2P application between a 3G base station and a radio network controller.
Figure 10 shows a schematic representation of the parts related to the present invention in a P2P application between a fixed 3G base station and a master Node-B.
Figure 11 shows a schematic representation of the parts related to the present invention in a P2P application for backhaul networks to collect the traffic of a big enterprise.

### DETAILED DESCRIPTION OF THE INVENTION

The present invention proposes a method and elements of a system, which in various preferred embodiments may be incorporated in Point to Point (P2P) applications of a wide area cellular telephone network operating in accordance with the 3GPP standards.

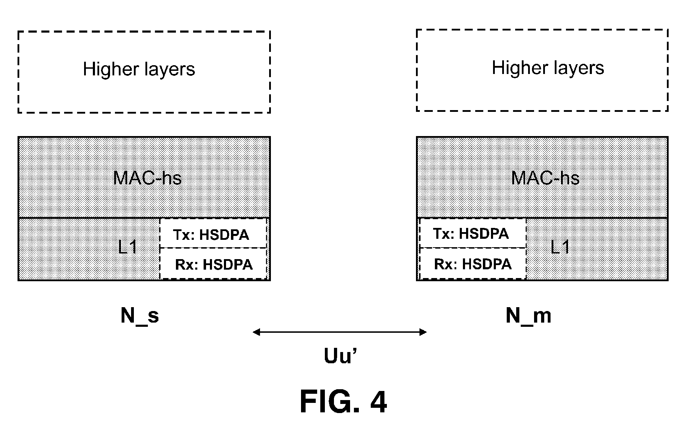

Figure 4 shows the protocol layers forming the high level architecture of the two termination points of the radio interface (Uu') which supports HSDPA on both uplink (UL) and downlink (DL), in accordance to the object of the invention. This radio interface (Uu') modifies the standardised Uu interface in order to support such bidirectional HSDPA. This Uu' interface established between a first node acting as a slave (N_s), which connects to a second node through the proposed Uu' interface, and the second node acting as a master (N_m). This second node can be a Node-B connected to a radio network controller (RNC) through a E1, STM-1, ETHERNET, etc., or can be integrated into the radio network controller (RNC), depending on the P2P application.

The architecture of both nodes connected trough this Uu', master Node (N_m) and slave Node (N_s), is identical at high level: both nodes use a Radio Resource Control (RRC) protocol and a Media Access Control (MAC) protocol over a channel of the physical layer (L1) and both nodes supporting HSDPA on this physical layer (L1) for transmission (Tx) as well as for reception (Rx).

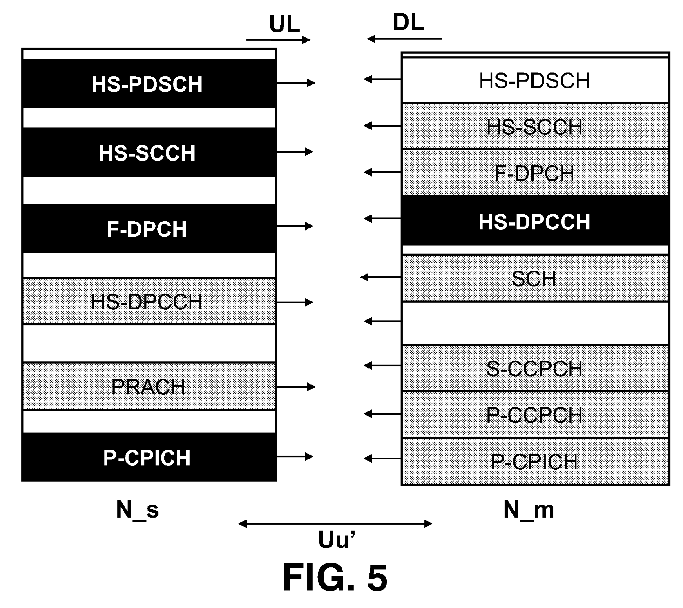

The architecture of the physical layer (L1) of these master Node (N_m) and slave Node (N_s) reuses some physical channels of the existing Uu interface, as illustrated in Figure 5. The blocks of Figure 5 drawn in white represent the existing physical channels in the user plane and the ones in grey are the existing physical channels in the control plane, while the black blocks represent modifications of Uu' interface with respect to the standard Uu interface. Thus, in Uu' user plane, the slave Node (N_s) reuses the HS-DPCCH and PRACH physical channels as the UE uses on Uu physical layer and this slave Node (N_s) provides Uu' physical layer with HS-SCCH, F-DPCH and P-CPICH to support bidirectional HSDPA. At the other termination point of Uu', the master Node (N_m) reuses the HS-SCCH, F-DPCH, SCH, S-CCPCH, P-CCPCH and P-CPICH physical channels as a Node-B normally uses on Uu physical layer. In addition, the master Node (N_m) provides Uu' user plane with HS-DPCCH physical channel to communicate with the slave Node (N_s) using HSDPA on both UL and DL. In Uu' control plane, both master Node (N_m) and slave Node (N_s) use HS-PDSCH, as a Node-B normally uses in control plane on Uu physical layer.

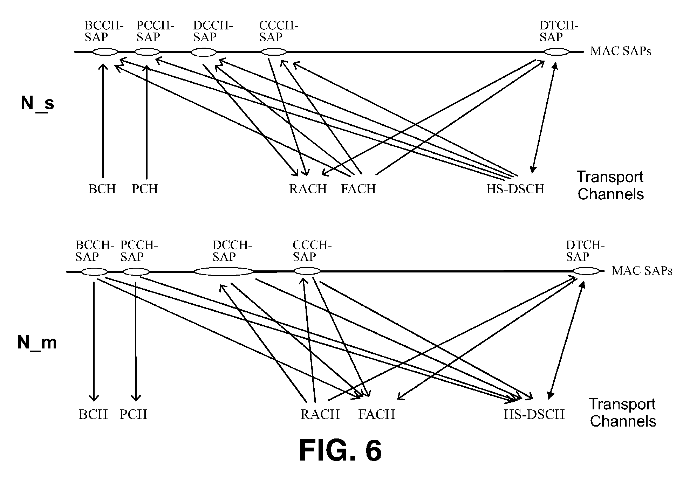

The functions of the physical layer (L1) include the mapping of transport channels onto physical channels used by the master Node (N_m) or the slave Node (N_s) depending on the Uu' termination point. The functions of MAC of the data link layer include the mapping of every logical channel defined at a Medium Access Control-Service Access Point (MAC SAP) onto the appropriate transport channels. Figure 6 shows that the mapping process at the data link layer deals with the same type of channels in the two termination points of the Uu' interface, but the mapping is defined in opposite directions depending on which termination point is: the master Node (N_m) or the slave Node (N_s). For both nodes, the following connections between logical channels and transport channels are allowed BCCH mapped to BCH and PCCH mapped to PCH, DCCH mapped to RACH DCCH mapped to FACH, CCCH mapped to RACH, CCCH mapped to FACH, DTCH mapped to DCH and DTCH mapped to HS-DSCH.

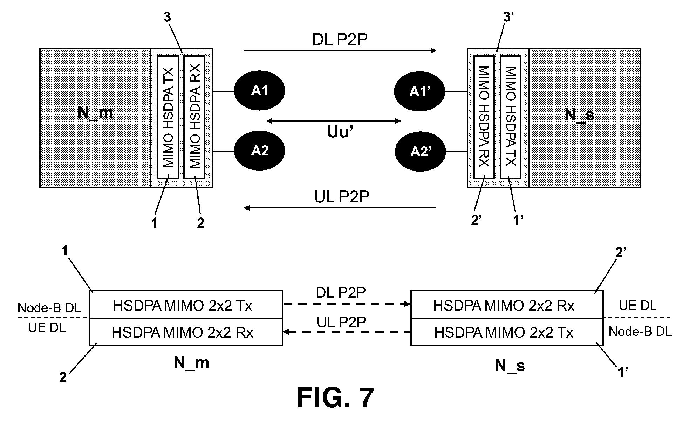

Figure 7 illustrates a preferred embodiment of the invention, which uses just only the standardised DL 3GPP MIMO technology, but not the standardised UL, to build P2P with bidirectional HSDPA, allowing symmetric rates on both UL and DL: 21.8 Mbps for Release 7 of 3GPP HSDPA MIMO, 32.6 Mbps for Release 8 of 3GPP HSDPA MIMO. In order to transmit/receive the downlink (DL) and uplink (UL) data signals, the 3G base stations in this P2P system, master and slave Nodes (N_m, N_s), incorporate respective transceivers (3, 3') that contain a transmitter (1, 1') and a receiver (2, 2'), associated to respective transmitting and receiving antennas (A1, A1', A2, A2'). The DL and UL transmitters (1, 1') are built based on a standard HSDPA MIMO 2X2 transmitter, which is used in a conventional Node-B supporting HSDPA for DL transmission. The DL and UL receivers (2, 2') are built based on the HSDPA MIMO 2X2 receiver used in the UE for DL reception.

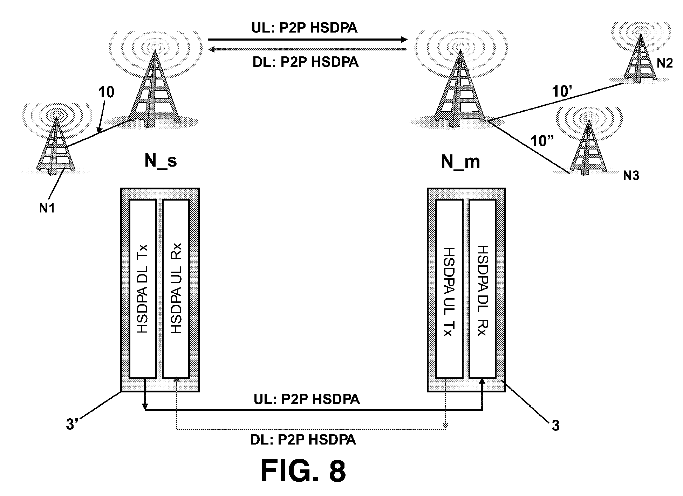

Figure 8 shows part of the access network of a wide area cellular telephone network including the elements of the system which determines an aspect the invention. The elements of interest in this scenario are the master and slave Nodes (N_m, N_s) integrated into 3G base stations, which can be connected to another 3G base station or to a RNC, UTRAN nodes (N1, N2, N3), by means of transport links (10, 10', 10"), for example, radio links - microwaves or WiMax- or wired links -E1, DSL, fiber-. The transceivers (3, 3') of the Nodes-B that are the master and slave Nodes (N_m, N_s) respectively support HSDPA for both DL and UL in a P2P transmission between said master and slave Nodes (N_m, N_s). This use of bi-directional HSDPA for P2P Node-B to Node-B transmission is a transport alternative to the other existing -radio or wired- transport links (10, 10', 10"). The bi-directional HSDPA include any transmission mode, e.g.
- HSDPA 16QAM 7.2Mbps
- HSDPA 16QAM 10.8Mbps
- 64QAM 16.2Mbps,
- MIMO 21.6Mbps or
- 64QAM+MIMO 32.4Mbps

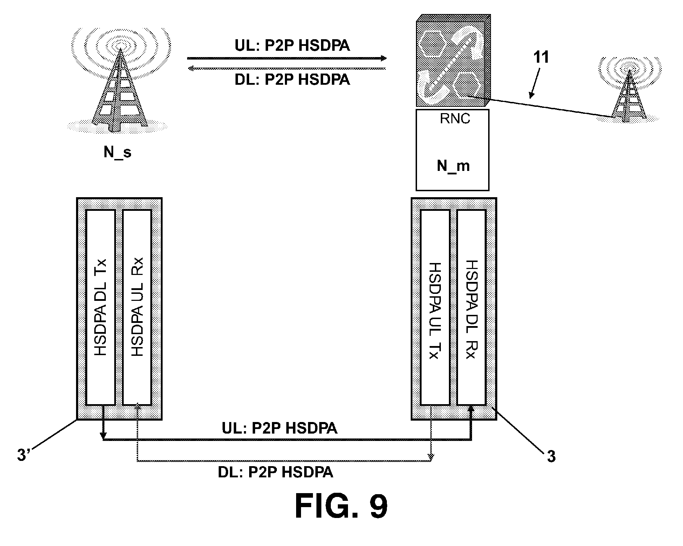

The same concept can be used to transport the uplink and downlink data signals in a P2P Node-B to RNC transmission over lub interface, as represented in Figure 9. This requires the integration of the radio network controller (RNC) with the master Node (N_m) for the HSDPA downlink reception and HSDPA Uplink transmission. The use of bi-directional HSDPA for Uu' transmission between this radio network controller (RNC) and the slave Node (N_s), which is a Node-B, is a transport alternative to other existing link (11) on Microwaves, WiMax, E1, DSL, fiber, for example.

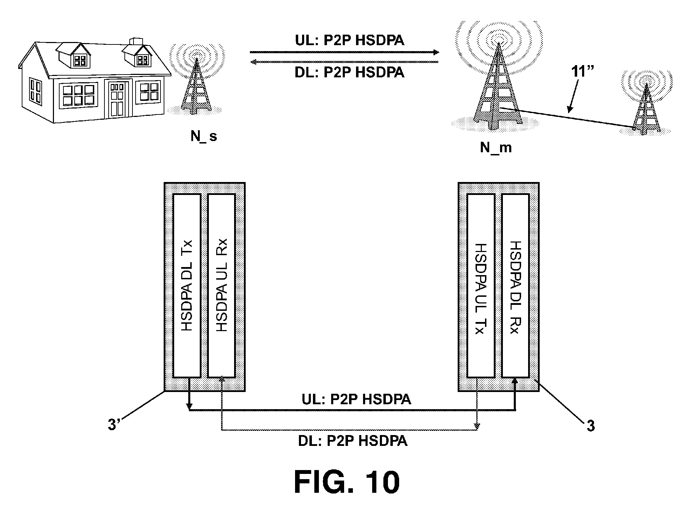

Another application of the invention, illustrated by Figure 10, consists of using bi-directional HSDPA transmission for P2P Node-B transmission as alternative to DSL, fiber or fixed WiMax links. The slave Node (N_s) in this application can be considered as a fixed User Equipment (UE). This slave Node (N_s) communicates with another Node-B, the master Node (N_m), on HSDPA UL and DL links, alternatives to existing links (11') such as E1 or Ethernet.

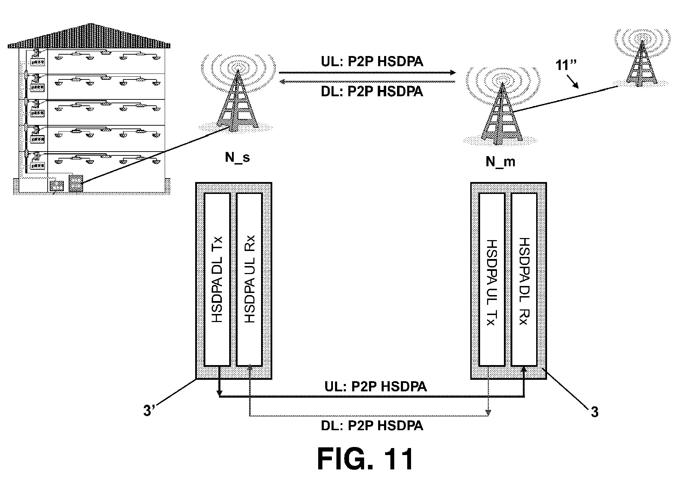

Figure 11 represents another P2P application: a backhaul network aggregating data traffic at an Enterprise Node-B level for transporting it to the operator network. This is complementary to the previous solution since the backhaul network application requires the installation of an slave Node (N_s) which is fixed and colleting all the traffic of the enterprise as an aggregator Node-B. This slave Node (N_s) connects with the master Node (N_m), which can be another Node-B or a RNC, by using bi-directional HSDPA for P2P transmission, instead of typical lub physical layer, for example, Microwaves, WiMax, E1, DSL, fiber, of other existing links (11") in the access network.

The terms in which this specification has been worded are always to be taken in the broadest sense and not restrictively.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

**1.** Method for transferring traffic in point to point communications, wherein a single connection between a first node and a second node of a radio network is setup on a radio interface, the method comprising:
- transmitting traffic to the second node from the first node on a downlink (DL) through the radio interface over a transport channel of a High-Speed Downlink Packet Access (HSDPA) MAC and physical layer;
**characterized by** further comprising:
- transmitting traffic to the first node from the second node on an uplink (UL) through the radio interface over a transport channel of the High-Speed Downlink Packet Access (HSDPA) MAC and physical layer.

**2.** Method according to claim 1, wherein transmitting traffic on the uplink (UL) and the downlink (DL) uses the radio interface supporting lub interface.

**3.** Method according to claim 1, wherein transmitting traffic on the uplink (UL) and the downlink (DL) uses the radio interface supporting lur interface.

**4.** Method according to claim 1, wherein transmitting traffic on the uplink (UL) and the downlink (DL) uses the radio interface supporting lu interface.

**5.** Method according to any previous claim, wherein the step of transmitting traffic on the uplink (UL) uses a physical channel which is selected from HS-PDSCH, HS-SCCH, F-DPCH and P-CPICH.

**6.** Method according to any previous claim, wherein the step of transmitting traffic on the downlink (DL) uses a HS-DPCCH physical channel.

**7.** System for transmitting/receiving traffic in point to point communications, within a radio network comprising:
- at least a slave node (N_s) for transmitting traffic on an uplink (UL),
- at least a master node (N_m) for transmitting traffic on a downlink (DL),
- a radio interface which connects the slave node (N_s) and the master node (N_m) for transmitting/receiving traffic in a point to point communication,
**characterized in that** both the, at least one, master node (N_m) and the, at least one, slave node (N_s) comprise a transceiver (3, 3') configured for using a transport channel of the High-Speed Downlink Packet Access (HSDPA) MAC and physical layer on the downlink (DL) and the uplink (UL), the transceiver (3, 3') comprising a transmitter (1, 1') and a receiver (2, 2') both connected to the radio interface.

**8.** System according to claim 7, wherein the transceiver (3') of the slave node (N_s) comprises:
- a transmitter (1') providing High-Speed Downlink Packet Access (HSDPA) through the radio interface for transmitting traffic on the uplink (UL),
- a receiver (2') providing High-Speed Downlink Packet Access (HSDPA) through the radio interface for receiving traffic on the downlink (DL).

**9.** System according to claim 8, wherein the transceiver (3) of the master Node (N_m) comprises:
- a transmitter (1) connected to the receiver (2') of the slave Node (N_s) through the radio interface and providing High-Speed Downlink Packet Access (HSDPA) for transmitting traffic on the downlink (DL),
- a receiver (2) connected to transmitter (1') the providing High-Speed Downlink Packet Access (HSDPA) of the slave Node (N_s) through the radio interface for receiving traffic on the uplink (UL).

**10.** System according to any of claims 7 to 9, wherein both the master node (N_m) and the slave node (N_s) are third generation base stations, and the radio interface between the master node (N_m) and the slave node (N_s) supports lub interface

**11.** System according to any of claims 7 to 9, wherein the master node (N_m) is a radio network controller (RNC) and the slave node (N_s) is a third generation base station, and the radio interface between the master node (N_m) and the slave node (N_s) supports lub interface.

**12.** System according to any of claims 7 to 9, wherein the slave node (N_s) is a radio network controller (RNC) and the radio interface between the master node (N_m) and the slave node (N_s) supports lu interface.

**13.** System according to any of claims 7 to 9, wherein both the master node (N_m) and the slave node (N_s) are radio network controllers (RNC), and the radio interface between the master node (N_m) and the slave node (N_s) supports lur interface.

**14.** System according to any of claims 7 to 13, wherein both the, at least one, master node (N_m) and the, at least one, slave node (N_s) has the transceiver (3, 3') configured for using on the uplink (UL), over the radio interface, a physical channel which is selected from, F-DPCH, HS-PDSCH, HS-SCCH, P-CPICH

**15.** System according to any of claims 7 to 14, wherein both the, at least one, master node (N_m) and the, at least one, slave node (N_s) has the transceiver (3, 3') configured for using on the downlink (DL), over the radio interface, a.HS-DPCCH physical channel.

**16.** A third generation base station which is adapted to be connected through a radio interface to at least a slave node (N_s) for a point to point communication of traffic of a single transceiver per cell in uplink (UL) and downlink (DL), **characterized by** comprising:
- a transmitter (1) providing High-Speed Downlink Packet Access (HSDPA) through the radio interface, for transmitting traffic to slave node (N_s) in the downlink (DL),
- a receiver (2) providing High-Speed Downlink Packet Access (HSDPA) through the radio interface for receiving traffic from the slave node (N_s) in the uplink (UL).

**17.** Third generation base station according to claim 16, wherein the receiver (2) is configured for using on the downlink (DL), at a physical layer of the radio interface, a HS-DPCCH physical channel.

**18.** A third generation base station which is adapted to be connected through Uu interface to one single user equipment (UE) transmitting/receiving in a cell for a point to point communication respectively in uplink (UL) and in downlink (DL) and adapted to be connected through a radio interface to at least a master node (N_m) for the point to point communication" **characterized by** comprising:
- a transmitter (1') providing High-Speed Downlink Packet Access (HSDPA) through the radio interface for transmitting traffic from the single user equipment (UE) in the uplink (UL),
- a receiver (2') providing High-Speed Downlink Packet Access (HSDPA) through the radio interface for receiving traffic from the single user equipment (UE) in the downlink (DL).

**19.** Third generation base station according to claim 18, wherein the transmitter (1') is configured for using on the uplink (UL), at a physical layer of the radio interface, a physical channel which is selected from F-DPCH, HS-PDSCH, HS-SCCH, P-CPICH.

**20.** Radio network controller (RNC) which is adapted to be connected through a radio interface to at least a node on a point to point communication for traffic of a single transceiver per cell in uplink (UL) and downlink (DL)" **characterized by** comprising:
- a transmitter (1) providing High-Speed Downlink Packet Access (HSDPA) through the radio interface for transmitting traffic in the downlink (DL),
- a receiver (2) providing High-Speed Downlink Packet Access (HSDPA) through the radio interface for receiving traffic in the uplink (UL).

**21.** Radio network controller (RNC) according to claim 20, wherein the receiver (2) is configured for using on the downlink (DL), at a physical layer of the radio interface, a HS-DPCCH physical channel.

**22.** Radio network controller (RNC) which is adapted to be connected through a radio interface to at least a node on a point to point communication for traffic of a single transceiver per cell in uplink (UL) and downlink (DL)" **characterized by** comprising:
- a transmitter (1') providing High-Speed Downlink Packet Access (HSDPA) through the radio interface for transmitting traffic in the uplink (UL),
- a receiver (2') providing High-Speed Downlink Packet Access (HSDPA) through the radio interface for receiving traffic in the downlink (DL).

**23.** Radio network controller (RNC) according to claim 21, wherein the transmitter (1') is configured for using on the uplink (UL), at a physical layer of the radio interface, a transport channel which is selected from F-DPCH, HS-PDSCH, HS-SCCH, P-CPICH.
